# EUROPEAN PATENT SPECIFICATION

(11) **EP 1 665 013 B1**
(45) Date of publication and mention of the grant of the patent: **21.10.2009**
(21) Application number: 04769872.5
(22) Date of filing: 27.08.2004
(51) Int. Cl.: G06F 3/00, H04L 29/08, G06F 13/38

(54) **CONTROL INTERFACE SELECTION**
STEUERSCHNITTSTELLEN-AUSWAHL
SELECTION D'UNE INTERFACE DE COMMANDE

(30) Priority: 09.09.2003 EP 03103326
(43) Date of publication of application: 07.06.2006
(73) Proprietor: Koninklijke Philips Electronics N.V., 5621 BA Eindhoven (NL)
(72) Inventor: CLOUT, Ramon, A., W., NL-5656 AA Eindhoven (NL); DOORNBOS, Richard, M., P., NL-5656 AA Eindhoven (NL)
(74) Representative: Groenendaal, Antonius W. M.
(86) International application number: PCT/IB2004/051589
(87) International publication number: WO 2005/024614

(56) References cited:
- WO-A-99/57837
- US-A1- 2002 029 256
- US-A1- 2003 104 826
- PATENT ABSTRACTS OF JAPAN vol. 1998, no. 02, 30 January 1998 (1998-01-30) & JP 9 282058 A (FUJI XEROX CO LTD), 31 October 1997 (1997-10-31)

## Description

This invention relates to a software entity e.g. a web-browser, arranged to be run on a computer which can be networked with controllable devices to transmit a signal from the computer to the controllable devices as a result of processing a document which defines operations to be performed by the software entity.

The document can be obtained by the computer sending a request via a data network to a server computer to send the document, e.g. in the form of a web-page, to the computer. The data network can be the Internet, another wide area network (WAN), and/or a local area network (LAN). Standardized and extremely widespread use of a common protocol such as TCP/IP (Transmission Control Protocol/Internet Protocol) provides for relatively simple communication across boundaries set by equipment of different type and make. Thus, the document is communicated by use of a protocol. The protocol is basically a specification of how to communicate and may be specified with regard to e.g. data formats of the communication. The protocol can be implemented by a program that complies with specification of e.g. the data formats. This program is also denoted an interface, an interface module etc. This program or interface works as a service to other programs by providing different methods that can be invoked by the other programs. The software entity is thus run on a computer that may connect to a data network for retrieving the document from a remote computer. However, the document may also or alternatively be retrieved from a storage memory of the computer.

The operations to be performed by the computer as specified in the document can involve a graphical presentation on a display screen as it is known from a web-browser, but playing of music and/or video and/or various other operations can also be executed. This however, will depend on the type of the software entity.

The operations to be performed by the computer as specified in the document can also, or alternatively, involve operations that are intended to be performed by a special type of device e.g. a personal digital assistant, PDA, or a mobile telephone. Such devices expose respective methods for controlling some operations of a respective device. The methods are provided via a device interface operating according to a given protocol. The devices, when considered in common however, lack a common widespread protocol for invoking the exposed methods and otherwise using the methods and results provided by them. However, in this context, it should be noted that some or all of the devices may show some similarities in their respective protocols, but generally they will not be so like that all of the control capabilities of the devices can be exploited by a single protocol. It seems like the predominant protocols are proprietary protocols.

In order for the software entity to communicate with such devices to use the provided methods, the computer must be arranged to comprise a control interface that supports a communication protocol which is compatible with a protocol of an interface of a given device. Thereby, the control interface can be employed to provide communication between the computer and the given device. A specific control interface can be selected according to a user's preferences e.g. by installing the control interface on the computer(s) which the device is intended interact with.

In the following a computer on which the software entity mentioned in the opening paragraph is run is denoted a 'control computer' and a device is denoted a 'controllable device'.

US patent application 2003/104826 discloses an external connection device with a Bluetooth function. If the host device has the Bluetooth driving program, data will be transmitted via Bluetooth. If the host device does not have the Bluetooth driving program, the data will be processed and transmitted via the common sharing (COM) port.

US patent application 2002/0029256 discloses an XML based template language for devices and services. The XML based template is provided to exchange properties of a controllable device with a control computer. Thereby, a control computer can learn about the controllable devices capabilities in a structured way. This can be used in connection with devices that conform to a so-called universal plug-and-play (UPnP) protocol or interface, where a controllable device makes itself known through a set of predefined processes.

Despite the versatility of the UPnP protocol this is only one of various protocols; thus, in the likely event communication with a controllable device which does not support UPnP is required, an interface compatible with the device must be selected at the control computer.

This interface is selected or stored on the control computer in connection with a procedure of installing/reinstalling the controllable device. Thus, subsequently, the interface will be bound to the specific controllable device.

However, this involves the problem that the software entity over time is bound to a specific interface and in turn to a specific controllable device. This aspect inhibits the flexibility of a system which otherwise in it's nature is very versatile.

The above and other problems in the prior art are solved when the software entity mentioned in the opening paragraph is arranged to be run on a control computer which can be networked with controllable devices to transmit a signal from the control computer to the controllable devices as a result of processing a document which defines operations to be performed by the software entity. The control computer is arranged to comprise a collection of control interfaces that each supports a communication protocol; wherein a respective control interface, with a protocol that is compatible with a protocol of the device interface of a given device, is employed to provide communication between the control computer and the given controllable device. And, according to the present invention, the software entity is arranged to determine which control interface to select from the collection of control interfaces by accessing a statement included in the document, where the statement specifies which of the control interfaces to select.

Consequently, it is possible from a single source - the document - on the one hand to control the operation of the control computer as determined by the capabilities of the software entity; and on the other hand to specify which controllable device the control computer shall interact with and how the controllable device is to be operated. Thereby, it is possible to specify in the document that a given graphical presentation is to be displayed on a display screen of the control computer, while a sequence of audio data is to be sent to a named PDA. The PDA communicates with the control computer and is being controlled from the control computer according to a protocol that can be proprietary to the vendor of the PDA. When e.g. the audio data is to be sent to another controllable device that uses a different protocol, the software entity is not bound to the former PDA, all other things being equal. Replacing the former PDA with another one or simply adding a new one can also lead to limited control possibilities of the controllable device and/or add formerly unused capabilities. Thus, since the operation of the system comprising the control computer and in turn the controllable device is specified in the document together with a specification of which control interface to use, an increased exploitation of the system's capabilities can be achieved.

Expediently, the control interfaces on the control computer provides software-implemented methods to the software entity for controlling operations of controllable devices via a respective device interface. Different interfaces may or typically will expose different methods, therefore it may be convenient to select the control computer execute operations of a portion of the document for one control interface, while it may be convenient to select a controllable device execute the same operations for another interface.

Preferably, the document includes the statement that specifies which of the control interfaces to select by means of a document fragment that conforms to the extensible Markup Language, XML, specification.

In a preferred embodiment the document fragment conforms to a language that specifies how multimedia objects are integrated spatially and/or temporally in a presentation. Such a language may conform to the XML specification and can comprise the Synchronized Multimedia Integration Language, SMIL. SMIL is a language that allows an author of a document to define and synchronize multimedia elements (video, sound, still images) for presentation and interaction e.g. in web-pages, and is defined by the World Wide Web consortium (W3C).

Preferably, the statement is in the form of a Uniform Resource Identifier, URI. The URI can comprise both the address of a controllable device and its type of interface. Thereby, the use of the controllable device can be controlled in a very precise and explicit way.

In a preferred embodiment, the control entity is a web-browser. The document can preferably be authored to conform to the extensible Hypertext Mark-Up Language, XHTML, which allows for defining various multimedia presentations while, with minor modifications, allows for including the statement that specifies which of the control interfaces to select.

The communication between the control computer and the controllable devices can comprise transmission of audio signals and/or video signals.

Additionally, the invention relates to a computer readable medium encoded with a program arranged to operate as set forth above when run on a computer.

Moreover, the invention relates to a control computer that comprises a software entity as set forth in the above.

Still moreover, the invention relates to a computer system comprising a control computer and a software entity as set forth in the above and controllable devices, which controllable devices each has a device interface that supports a communication protocol.

Also, the invention relates to a computer-implemented method, arranged to be run as a program on a control computer that can be networked with controllable devices to transmit a signal from the control computer to the controllable devices as a result of processing a document which defines operations to be performed by the software entity; wherein the control computer comprises a collection of control interfaces that each supports a communication protocol. The method comprises the step of: determining which control interface to select from the collection of control interfaces by accessing a statement included in the document, which statement specifies the control interface to select.

In a preferred embodiment the method comprises the steps of: accessing the statement included in the document, which statement specifies a network address of a named device; and opening a connection to named device.

Expediently, the method comprises the steps of: accessing the statement included in the document, which statement specifies the source address of a given piece of content; and sending the given piece of content as a signal to the network address of the given device.

In the following the invention will be described in greater detail with a reference to the drawing, in which:
fig. 1 shows a block diagram of a preferred embodiment of the invention; and
fig. 2 shows flowchart for a method, in accordance with the invention, of processing a document.

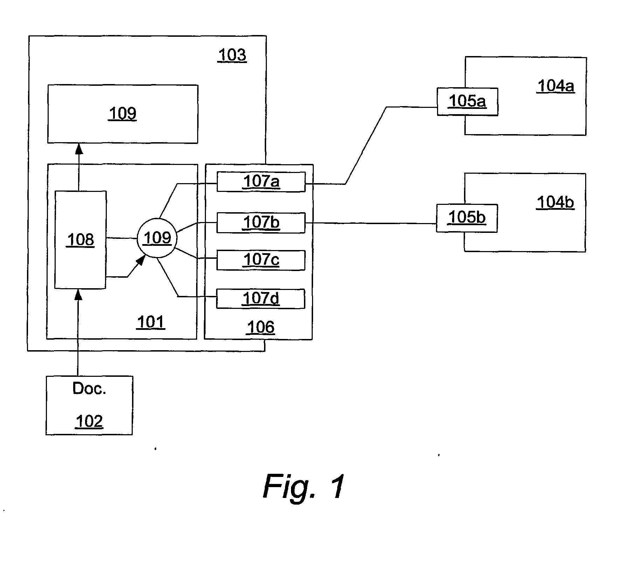

Fig. 1 shows a block diagram of a preferred embodiment of the invention. The software entity 101 is run on the control computer 103. The control computer 103 is connected to one or more controllable devices 104a; 104b. The controllable devices are controllable via methods provided via device interfaces 105a, 105b of respective devices. The device interfaces are compatible with respective control interfaces 107a, 107b to 107d by use of a communication protocol supported by both the device and control interfaces.

Additionally, the control computer 103 can be connected to a data network (not shown) to retrieve a document 102. The document 102 can also or alternatively be retrieved from a storage memory (not shown) of the control computer.

The document can be of different type and form, but could comprise a SMIL fragment as shown below:

```
 <smil>
                <head>
                        <layout>
                                 <topLayout id="top">
                                          <region id="a"/>
                                 </topLayout>
                        </layout>
                </head>
                <body>
                        <seq>
                                 <audio src="http://one.mp3" region="a"/>
                                 <audio src="http://two.mp3" region="a"/>
                                 <audio src="http://three.mp3" region="a"/>
                                 <audio src="http://four.mp3" region="a"/>
                        </seq>
                </body>
 <smil>
```

The above fragment defines a presentation in which a sequence, as enclosed with the tags <seq> and </seq>, of files (one.mp3; two,mp3; three.mp3; four.mp3) conforming to the MP3 specification are to be played in succession in a region 'a'. The region is defined by the tags <region> and <topLayout>, </topLayout> enclosed by the tags <layout> and </layout>.

According to a preferred embodiment of the invention, the above-mentioned statement that specifies the control interface 107a-d to select can be implemented by the addition of an attribute e.g. to the <topLayout> element to define the controllable device, e.g. 105a, that is to be controlled and which interface, 107a, to be used to control the device. The attribute could exemplary appear as the following URI:
<topLayout id="top" target="mal://internetradio.myhome.com/radiointerface"/>

Here, "mal" is the control interface that is to be used to control the device; "internetradio.myhome.com" is used to address the device; and "/radiointerface" is optional, additional information for the protocol.

It should be noted that the statement can be embodied in various other ways as long as it can be deduced to which content (in this example the four mp3-files) the interface is to be employed.

As an alternative to define the URI directly in the document as an XML fragment, it can also be included in a configuration file, in an included XML document, or as a parameter for starting the control entity.

The control interface can be embodied as interface modules. These can be used by the software entity using a plug-in mechanism.

The software entity 101 comprises a component 108 that is arranged to process documents 102; this will typically involve interpreting the statements in the documents 102 to make a graphical presentation on a display screen 110 of the control computer and/or to use the methods provided by the controllable devices via their interfaces. However, the component 108 is also arranged parse the document 102 to make the content of the document available to the software entity e.g. by means of a so-called document object model, DOM. Thereby, the statement that specifies which control interface 107a-d to select can be provided to a selector 109 that is arranged to select the interface.

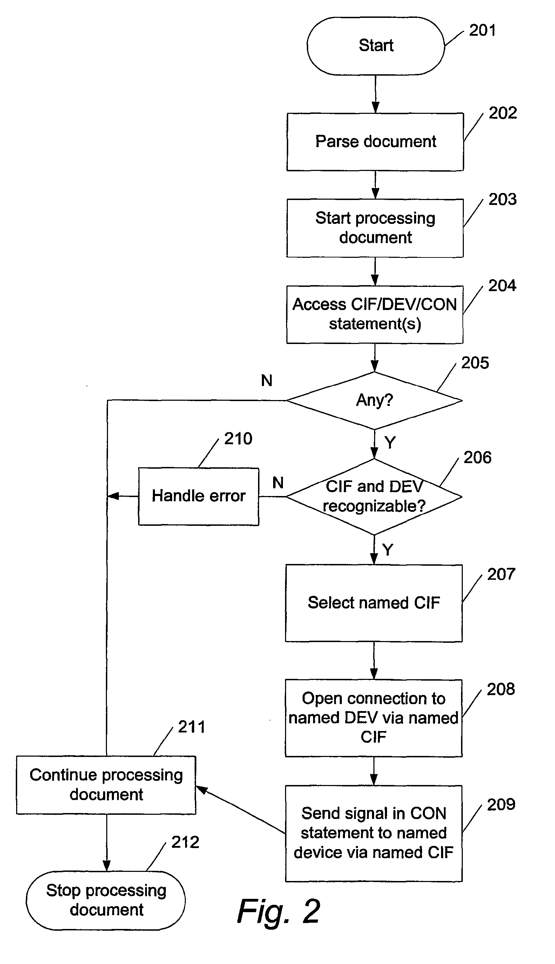

Fig. 2 shows flowchart for a method, in accordance with the invention, of processing a document. The method starts in step 201 wherein a document is loaded e.g. as a response to a request from the software entity. Subsequently, in step 202, the loaded document is parsed and its content is provided. In step 203, processing of the document is started. This processing comprises accessing statements specifying the control interface, CIF, to select; the address of or the device, DEV, to communicate with; and the content, CON, to send to the specified device.

If none of these statements (CIF, DEV, CON) are present in the document, the processing of the document not involving these statements is continued in step 211, until the processing is to be stopped, which happens in step 212.

Alternatively, if these statements are present, it is determined in step 206 whether the specified control interface, CIF, and device, DEV, is recognizable by the software entity. If they are not recognizable processing of the document may resume via step 210, wherein the situation is handled as an error. If, they are recognizable the specified or named control interface, CIF, is selected in step 207. Subsequently, in step 208, the software entity opens a connection to the specified or named device, DEV, via the selected control interface. At an appropriate point in time, which may be specified in the document, the specified content is started being sent as a signal to the device via the selected control interface. Subsequently, the processing of the document is continued in step 211 until the processing is being stopped in step 212.

A special application of the present invention is within Internet; Internet or web browsers. However, also home-automation for the control of controllable devices such as controllable curtains, lamps and other home appliances is an application of the present invention. In the latter case, XML documents may define the operation/cooperation of the devices.

## Claims

1. A computer-implemented method, arranged to be run as a program on a control computer (103) that can be networked with controllable devices (104) to transmit a signal from the control computer to the controllable devices as a result of processing a document (102) which defines operations to be performed by the control computer (103); wherein
the control computer comprises a collection (106) of control interfaces (107) that each supports a communication protocol;
**characterized in that** the method comprises the step of:
determining which control interface (107) to select from the collection (106) of control interfaces (107a-d) by accessing a statement included in the document (102), which statement specifies the control interface (107a-d) to select.

2. A method (200) according to claim 1, wherein the method comprises the steps of:
accessing (204) the statement included in the document (102), which statement specifies a network address of a named device; and
opening (208) a connection to named device.

3. A method according to claim 2, wherein the method comprises the steps of:
accessing (204) the statement included in the document (102), which statement specifies the source address of a given piece of content; and
sending (209) the given piece of content as a signal to the network address of the given device.

4. A method according to claim 1, wherein the control interfaces (107a-d) on the control computer (103) provide software-implemented methods for controlling operations of controllable devices (104a;104b) via a respective device interface (105a; 105b).

5. A method according to claim 1, wherein the document (102) includes the statement by means of a document fragment that conforms to the extensible Markup Language, XML, specification.

6. A method according to claim 5, wherein the document fragment conforms to a language that specifies how multimedia objects are integrated spatially and/or temporally in a presentation.

7. A method according to claim 1, wherein the statement is in the form of a Uniform Resource Identifier, URI.

8. A method according to claim 1, wherein the program is a web-browser.

9. A method according to claim 1, wherein the communication between the control computer and the controllable devices comprise transmission of audio signals and/or video signals.

10. A computer readable medium encoded with a program arranged to execute the method as set forth above in claims 1 to 9 when run on a computer.

11. A computer program product enabling a computer to perform the method as set forth above in claims 1 to 9.

12. A control computer (103) arranged to execute the method as set forth above in claims 1 to 9.

## Patentansprüche

1. Computerimplementiertes Verfahren, welches als ein auf einem Steuercomputer (103) abzulaufendes Programm vorgesehen ist, das mit steuerbaren Einrichtungen (104) vernetzt werden kann, um aufgrund der Verarbeitung eines Dokuments (102), welches von dem Steuercomputer (103) durchzuführende Operationen definiert, ein Signal von dem Steuercomputer zu den steuerbaren Einrichtungen zu übertragen; wobei
der Steuercomputer eine Reihe (106) von Steuerschnittstellen (107) umfasst, die jeweils ein Kommunikationsprotokoll unterstützen;
**dadurch gekennzeichnet, dass** das Verfahren den folgenden Schritt umfasst:
Ermitteln, welche Steuerschnittstelle (107) aus der Reihe (106) von Steuerschnittstellen (107a-d) auszuwählen ist, indem auf eine in dem Dokument (102) enthaltene Anweisung, welche die auszuwählende Steuerschnittstelle (107a-d) spezifiziert, zugegriffen wird.

2. Verfahren (200) nach Anspruch 1, wobei das Verfahren die folgenden Schritte umfasst:
Zugreifen (204) auf die in dem Dokument (102) enthaltene Anweisung, die eine Netzwerkadresse einer benannten Einrichtung spezifiziert; sowie
Öffnen (208) einer Verbindung mit benannter Einrichtung.

3. Verfahren nach Anspruch 2, wobei das Verfahren die folgenden Schritte umfasst:
Zugreifen (204) auf die in dem Dokument (102) enthaltene Anweisung, welche die Quelladresse eines vorgegebenen Inhaltsteils spezifiziert; sowie
Übertragen (209) des vorgegebenen Inhaltsteils als ein Signal zu der Netzwerkadresse der vorgegebenen Einrichtung.

4. Verfahren nach Anspruch 1, wobei die Steuerschnittstellen (107a-d) auf dem Steuercomputer (103) softwareimplementierte Verfahren zur Steuerung von Operationen von steuerbaren Einrichtungen (104a;104b) über eine jeweilige Geräteschnittstelle (105a; 105b) vorsehen.

5. Verfahren nach Anspruch 1, wobei das Dokument (102) die Anweisung durch ein Dokumentenfragment enthält, welches der eXtensible-Markup-Language-, XML, Spezifikation entspricht.

6. Verfahren nach Anspruch 5, wobei das Dokumentenfragment einer Sprache entspricht, die spezifiziert, wie Multimedia-Objekte räumlich und/oder zeitlich in eine Darstellung integriert sind.

7. Verfahren nach Anspruch 1, wobei die Anweisung in Form eines Uniform Resource Identifier, URI, vorgesehen ist.

8. Verfahren nach Anspruch 1, wobei das Programm ein Web-Browser ist.

9. Verfahren nach Anspruch 1, wobei die Kommunikation zwischen dem Steuercomputer und den steuerbaren Einrichtungen die Übertragung von Audiosignalen und/oder Videosignalen umfasst.

10. Computerlesbares Medium, welches mit einem Programm codiert ist, das zur Ausführung des Verfahrens nach einem der Ansprüche 1 bis 9 auf einem Computer vorgesehen ist.

11. Computerprogrammprodukt, welches einem Computer die Durchführung des Verfahrens nach einem der Ansprüche 1 bis 9 ermöglicht.

12. Steuercomputer (103), der angeordnet ist, um das Verfahren nach einem der Ansprüche 1 bis 9 auszuführen.

## Revendications

1. Procédé mis en oeuvre par un ordinateur, prévu pour être exécuté comme un programme sur un ordinateur de contrôle (103) qui peut être mis en réseau avec des dispositifs contrôlables (104) pour émettre un signal depuis l'ordinateur de contrôle vers les dispositifs contrôlables en conséquence du traitement d'un document (102) qui définit les opérations devant être réalisées par l'ordinateur de contrôle (103) ; dans lequel
l'ordinateur de contrôle comprend un ensemble (106) d'interfaces de contrôle (107) supportant chacune un protocole de communication ;
**caractérisé en ce que** le procédé comprend l'étape destinée à :
déterminer l'interface de contrôle (107) qui doit être sélectionnée parmi l'ensemble (106) d'interfaces de contrôle (107a-d) en accédant à une instruction incluse dans le document (102), laquelle instruction spécifie l'interface de contrôle (107a-d) devant être sélectionnée.

2. Procédé (200) selon la revendication 1, dans lequel le procédé comprend les étapes destinées à :
accéder (204) à l'instruction incluse dans le document (102), ladite instruction spécifiant une adresse réseau d'un dispositif désigné ; et
ouvrir (208) une connexion vers un dispositif désigné.

3. Procédé selon la revendication 2, dans lequel le procédé comprend les étapes destinées à :
accéder (204) à l'instruction incluse dans le document (102), laquelle instruction spécifie l'adresse source d'un élément de contenu donné ; et
envoyer (209) l'élément de contenu donné comme un signal à l'adresse réseau du dispositif donné.

4. Procédé selon la revendication 1, dans lequel les interfaces de contrôle (107a-d) sur l'ordinateur de contrôle (103) fournissent des procédés mis en oeuvre par un logiciel pour contrôler les opérations des dispositifs contrôlables (104a ; 104b) par l'intermédiaire d'une interface de dispositif respective (105a ; 105b).

5. Procédé selon la revendication 1, dans lequel le document (102) comprend l'instruction au moyen d'un fragment de document conforme à la spécification du langage de balisage extensible, XML.

6. Procédé selon la revendication 5, dans lequel le fragment de document est conforme à un langage spécifiant la façon dont les objets multimédia sont intégrés spatialement et/ou temporellement dans une présentation.

7. Procédé selon la revendication 1, dans lequel l'instruction a la forme d'un Identifiant Uniforme de Ressource, URI.

8. Procédé selon la revendication 1, dans lequel le programme est un navigateur internet.

9. Procédé selon la revendication 1, dans lequel la communication entre l'ordinateur de contrôle et les dispositifs contrôlables comprend la transmission de signaux audio et/ou de signaux vidéo.

10. Support lisible par un ordinateur encodé avec un programme disposé pour exécuter le procédé décrit ci-dessus dans les revendications 1 à 9, quand il est exécuté sur un ordinateur.

11. Produit de programme informatique permettant à un ordinateur de réaliser le procédé décrit ci-dessus dans les revendications 1 à 9.

12. Ordinateur de contrôle (103) disposé pour exécuter le procédé décrit ci-dessus dans les revendications 1 à 9.
